# EUROPEAN PATENT SPECIFICATION

(11) **EP 3 647 588 B1**
(45) Date of publication and mention of the grant of the patent: **11.10.2023**
(21) Application number: 19206555.5
(22) Date of filing: 31.10.2019
(51) Int. Cl.: F03D 7/04, F03D 7/02

(54) **A DYNAMIC OPTIMISATION STRATEGY FOR IMPROVING THE OPERATION OF A WIND FARM**
DYNAMISCHE OPTIMIERUNGSSTRATEGIE ZUR VERBESSERUNG DES BETRIEBS EINES WINDPARKS
STRATÉGIE D'OPTIMISATION DYNAMIQUE POUR AMÉLIORER LE FONCTIONNEMENT D'UN PARC ÉOLIEN

(30) Priority: 31.10.2018 DK PA201870706
(43) Date of publication of application: 06.05.2020
(73) Proprietor: Vattenfall AB, 169 79 Stockholm (SE)
(72) Inventor: Fischetti, Martina, 2000 Frederiksberg (DK); Hjort, Thomas Enné, 7120 Vejle Ø (DK); Kristoffersen, Jesper Runge, 6200 Aabenraa (DK); Kordkheili, Reza Ahmadi, 7100 Vejle (DK)
(74) Representative: Zacco Denmark A/S

(56) References cited:
- EP-A1- 2 940 296
- EP-A1- 3 121 442
- ZHANG BAOHUA ET AL: "Wind farm active power dispatch for output power maximizing based on a wind turbine control strategy for load minimizing", 2015 INTERNATIONAL CONFERENCE ON SUSTAINABLE MOBILITY APPLICATIONS, RENEWABLES AND TECHNOLOGY (SMART), IEEE, 23 November 2015 (2015-11-23), pages 1-6, XP032858929, DOI: 10.1109/SMART.2015.7399215 [retrieved on 2016-02-03]

## Description

The present invention relates to a strategy for optimising the operation of a wind farm, in particular with respect to energy production.

### Background of the invention

It is well-known that the individual wind turbines of a wind farm experience different operational conditions, not only due to different positions in relation to the surrounding landscape but also due to so-called wake effects caused by other turbines further upstream the wind direction.

Basically, such wake effects includes at least two elements, namely a reduction of the wind speed and an increase of the wind turbulence downstream the wind turbine causing the wake effects. The reduced wind speed leads to a reduced power output of downstream wind turbines, whereas the increased wind turbulence leads to increased fatigue loads onto the downstream wind turbines.

In general, the magnitude of the wake effects behind a given wind turbine increases with an increasing output of the wind turbine. It is possible to make different models of the wake effects, but due to the multiple interactions between the sometimes numerous wind turbines of a wind farm, the resulting wake effects throughout the wind farm are very complex.

It is normally attempted to optimise the overall energy production of the wind farm by optimising the energy production of the individual wind turbines. According to an immediate human perception, the first row of wind turbines, i.e. the most upstream wind turbines, of the wind farm will be the ones creating the most interference and, thus, having the largest impact on the overall energy production of the wind farm. This is probably the reason that most of the literature studies focuses on derating/curtailing the first row of wind turbines.

This does not necessarily provide the best strategy of controlling the wind farm, since reducing the wake effects behind the first row of wind turbines does not necessarily reduce the overall wake effects within the wind farm. On the contrary, due to the complexity of the wake effects between the wind turbines of a wind farm, finding the most optimal curtailment strategy on the wind farm level is by no means trivial, as it may vary significantly from one wind scenario to another, even with similar wind directions but different wind speeds.

Apart from strategies for controlling the operation of wind farms with the aim of optimising the Annual Energy Production (AEP), other aims such as optimising the profit of the wind farm by taking cost models and degradation of the wind turbines due to fatigue into account are also known in the art. EP2940296 A1 is an example of prior art.

### Brief description of the invention

It is an object of the present invention to provide a dynamic optimisation strategy resulting in improved operation of wind farms as compared to the above-mentioned existing strategies known in the art.

The present invention relates to a method according to claim 1 for controlling the operation of a wind farm comprising a plurality of wind turbines and control means arranged to be able to exchange data with each of the wind turbines of the wind farm, said method comprising the steps of:
- establishing, for each wind turbine of the wind farm, a model for the wake effects caused by the given wind turbine for a given set of environmental conditions,
- defining, for each wind turbine of the wind farm, a finite number of sets of operational set points, each of which set of operational set points corresponds to a defined operational performance, at which that specific wind turbine can be operated,
- defining optimisation criterion for the wind farm, and
- repeating the steps of:
   ∘ receiving data concerning environmental conditions around the wind farm
   ∘ optimising, on the basis of the received data concerning environmental conditions and the established models for wake effects, the operation of the wind farm by selecting the set of operational set points for each of the individual wind turbines, respectively, which, according to the corresponding operational performance results in the optimal fulfilment of the optimisation criterion for the wind farm
   ∘ sending data to the individual wind turbines instructing them to operate at the selected sets of operational set points, and
   operating the individual wind turbines of the wind farm at the selected sets of operational set points.

An optimisation method like this enables for a continuous optimisation of the operation of the wind farm and, thereby, for an optimisation of the operation thereof, taking explicitly into account the very complex interactions of the wake effects of the individual wind turbines. Each different set of operational set points for each wind turbine can represent a thoroughly considered and tested operational state of the wind turbine whereby possible unwanted effects of instability of operation, vibrations or oscillation of wind turbine parts or excessive load on part leading to degradation of that part or parts may be avoided. By optimising on defined operational performances corresponding to complete sets of operational set points, the optimisation is performed on the actual foreseen operational behaviour of the wind turbines.

The method may further comprise the step of including the operating conditions of each of the wind turbines in the wind farm, such as detecting wind turbines, which don't have normal operating conditions, such as being out of service or being curtailed or any other reason.

The finite number of sets of operational set point is established for each of the individual wind turbine and typically depends on the wind turbine model and may thus be different for the individual wind turbines of the wind farm.

By the term set of operational set points is understood a group of control settings, such as e.g. look-up tables for pitch angle of the blades as function of the wind speed, used for controlling the operation of the wind turbine, such as control of the pitch of the turbine blades, the torque control of the electric generator, the limits of the torque and power experienced by the drive train, principally the low-speed shaft, yaw control of the wind turbine, etc. with the aim of controlling the operational performance of the wind turbine. The operational performance of a wind turbine includes the power production as a function of the wind speed, which is often illustrated as power curves or power coefficient (Cₚ) curves. An operational parameter can also be the thrust on the wind turbine rotor, which likewise often is illustrated as a function of the average wind speed in thrust curves or thrust coefficient (Cₜ) curves. Thus, each of the finite number of sets of operational set point for each of the individual wind turbine typically corresponds to a power curve or a power coefficient (Cₚ) curve and/or a thrust curves or thrust coefficient (Cₜ) curve for that wind turbine.

The optimisation criterion may be a single criterion or a combination of different criteria. A typical criterion is maximising the power output of the wind farm or the (annual) energy production of the wind farm. Other criteria include reduction of or minimizing the degradation of various parts of the wind turbine due to stress induced fatigue, delimiting the power production of the wind farm due to external limitations, reduction or limitation of noise emission from the wind farm. These and other criteria may, alone or in combination, be applied and the operation of the wind farm may be optimised accordingly by means of the present method.

In an embodiment of the invention, the established models for wake effects take into account one or more of the following environmental conditions:
- the wind direction
- the wind speed
- the wind turbulence
- the wind shear
- wind veer
- the temperature of the air
- the humidity of the air
- the position of the wind turbine relative to the landscape
- the position of the wind turbine within the wind farm
- the distance between the wind turbines of the wind farm

The distance between the wind turbines of the wind farm results in a time delay in the propagation of the wake of one wind turbine to the next.

In an embodiment of the invention, said optimisation criterion comprises the energy production of the wind farm and operational performance corresponding to the sets of operational set points include the relation between power production and wind speed.

Basically, such power curves define the power output of the wind turbine, which is to be produced at varying wind speeds.

The optimisation criterion may additionally or alternatively comprise the degradation of the individual wind turbines of the wind farm. For that use, the operational performance corresponding to the sets of operational set points may include the relation between thrust and wind speed, which also may be used in the wake model calculations.

In the invention, the sets of operational set points are certified by the manufacturer of the wind turbine. By using sets of operational set points, which are certified by the wind turbine manufacturer, a safer performance of the wind turbine is obtained. However, sets of operational set points may be defined from model simulations of the individual wind turbine and/or tests carried out on the type of wind turbine in order to establish a well-defined operational performance of the wind turbine operating according to said set of operational set points.

In the invention, the sets of operational set points define the pitch control of the individual wind turbine. The control of the pitch of the blades of the wind turbine is a well-known strategy for controlling in particular the power production of a wind turbine, both for increasing the power production for a shorter period of time according to a so-called boost curve, where the power output may be 120% of the nominal output of the wind turbine, or it may be used for curtailment of the power production. Furthermore, the pitch control may be varied for seasonal reasons, following the change in air temperature and thereby density and in the turbulence of the wind.

In an embodiment of the invention, the sets of operational set points define the torque control, i.e. control of the electromagnetic torque of the generator of the individual wind turbines. Torque control is often applied in conjunction with pitch control and/or with yaw control, which according to the present invention is defined by sets of operational set points defining the yaw control of the individual wind turbines. Yaw control is applied to curtail the wind turbine, i.e. to reduce the power output from the wind turbine and to control the wake from the wind turbine in magnitude and also to a certain extent the direction of the wake effect.

It should be noted that the operational performance of the wind turbine may change due to changes to the wind turbine, such as addition of vortex generators or turbulence generators or other add-ons that alter the characteristics of the blades, the nacelle or the tower of the wind turbines, to the parts of the turbine, and the performance data for the optimisation method, such as wake effect and/or power production should be updated accordingly.

In an aspect of the invention, it relates to a wind farm comprising a plurality of wind turbines, as well as communication means and control means, arranged to be able to exchange data with each of the wind turbines of the wind farm and to control the operation of the wind farm in accordance with the method described above.

In an embodiment of the invention, the operation of the wind farm is being controlled in accordance with the method described above.

### The drawings

In the following, a few exemplary embodiments of the invention are described in further detail with reference to the figures, of which
- Fig. 1: is a schematic view of a wind farm,
- Fig. 2: is a schematic view of a set of power curves for a given wind turbine, and
- Fig. 3: is a schematic view of a set of thrust coefficient (Cc) curves for a given wind turbine.

### Detailed description of the invention

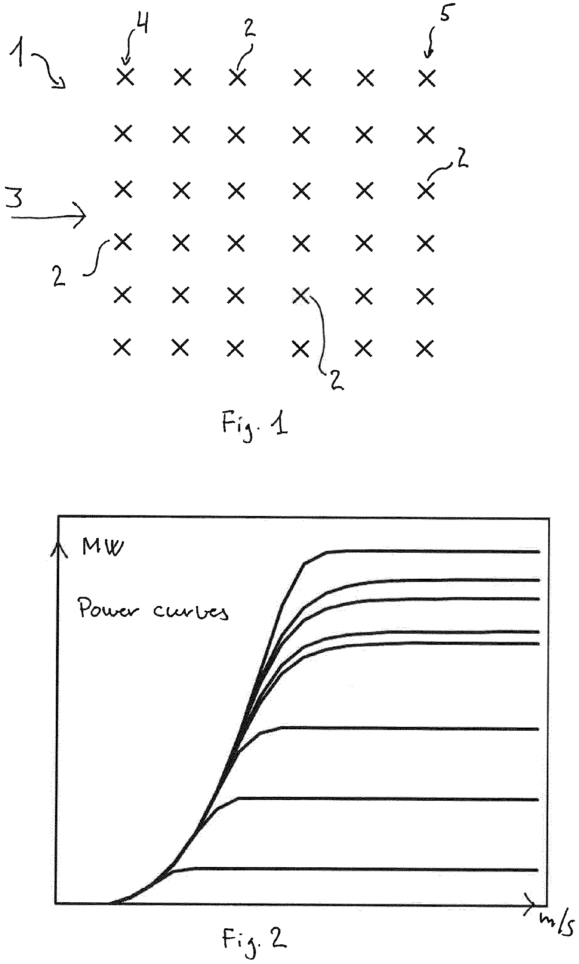

Fig. 1 is a schematic view of a wind farm 1 comprising 49 wind turbines 2, which are arranged in a 7-by-7 quadratic pattern. The indicated wind direction 3 defines a first row 4 and a last row 5 of wind turbines 2 comprising the most upstream and the most downstream wind turbines 2, respectively.

Fig. 2 is a schematic view of a set of power curves corresponding to different sets of operational set points of a given wind turbine 2, showing the power output as a function of the wind speed. The uppermost curve corresponds to a boost curve of the wind turbine 2, where the power output exceeds the power output at the standard operation of the wind turbine 2 as depicted in the curve below.

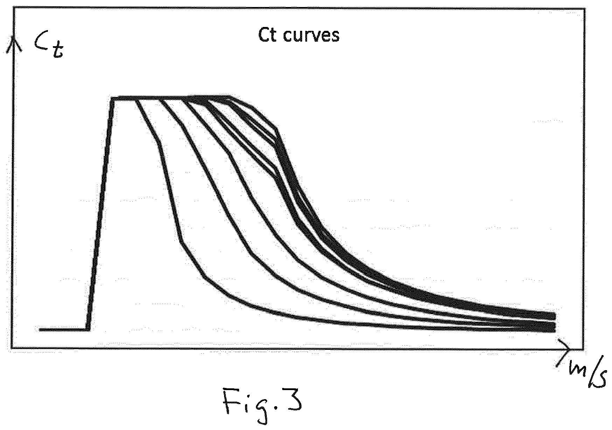

Similarly, Fig. 3 is a schematic view of a set of thrust coefficient curves, the uppermost corresponding to the thrust at the rotor when operating at the set of operational set points corresponding to the power boost curve as shown in Fig. 2.

In case the optimisation criterion is the energy production or power production of the wind farm, an advantage of the optimisation method according to the present invention is that, apart from the constriction to a limited number of different levels of curtailment for the individual wind turbines 2, the levels of curtailment can be selected and combined to maximise the overall energy production of the wind farm 1 without any pre-structured rules. Thus, the actual combination of the discrete levels of curtailment, which actually results in the largest power output according to the used models for wake effects, will be found.

Thus, the present invention provides a tool for defining the best overall optimisation strategy, such as the curtailment strategy resulting in the largest overall energy production, for a given layout of a wind farm 1 and with a certain number of possible individual curtailment strategies predefined for each wind turbine 2 of this wind farm 1. The method defines, which individual operational performances of each of the wind turbines 2 of the wind farm 1 must follow in order to e.g. maximise the overall energy production of the wind farm 1 at a given wind scenario. Results have proven that, using the selected overall curtailment strategy, the park production increases significantly in some particular wake-effected scenarios.

The interaction between the wake effects of the individual wind turbines 2 of the wind farm 1 being very complex, finding the optimal curtailment strategy is by no means a trivial tasks, and use of the method according to the present invention has confirmed that the optimal strategy is non-obvious and varies depending on the wind scenario (also between scenarios with the same wind direction 3 but different wind speeds).

As an example, an optimisation was performed for a wind farm 1 with a layout as shown in Fig. 1 and with a wind speed of 11 meters per second, assuming that the wind turbines 2 were of a certain type with a rotor diameter of 113 meters and a distance between neighbouring wind turbines 2 of 565 meters, corresponding to five rotor diameters. Surprisingly, the suggested optimal curtailment strategy for this setup was to keep the first row 4 and the last row 5 of wind turbines 2 at full production level, while operating all the wind turbines 2 of the five rows there between at the maximum curtailment level, i.e. at the lowest production level. This is almost an opposite strategy of what is normally suggested in the literature, namely primarily to curtail the wind turbines 2 in the first row 4. However, an evaluation of this suggestion using third party simulation software showed that, in this wind scenario, the suggested strategy resulted in a larger production from the wind farm 1 than would have been the case with no curtailing at all or with using the standard approach of curtailing the first row(s) 4 of wind turbines 2.

### List of reference numbers

- 1.: Wind farm
- 2.: Wind turbine
- 3.: Wind direction
- 4.: First row of wind turbines
- 5.: Last row of wind turbines

## Claims

1. A method for controlling the operation of a wind farm (1) comprising a plurality of wind turbines (2) and control means arranged to be able to exchange data with each of the wind turbines (2) of the wind farm (1), said method comprising the steps of:
- establishing, for each wind turbine (2) of the wind farm (1), a model for the wake effects caused by the given wind turbine (2) for a given set of environmental conditions,
- defining, for each wind turbine (2) of the wind farm (1), a finite number of sets of operational set points including at least set points defining the pitch control of the individual wind turbine (2) and set points defining the yaw control of the individual wind turbine (2), each of which set of operational set points corresponds to a defined operational performance including the relation between power production and the wind speed, at which that specific wind turbine (2) can be operated, wherein the sets of operational set points define different operational performances, and wherein each set of operational set points are certified by the manufacturer of the wind turbine (2),
- defining optimisation criterion for the wind farm, and
- repeating the steps of:
∘ receiving data concerning environmental conditions around the wind farm (1)
∘ optimising, on the basis of the received data concerning environmental conditions and the established models for wake effects, the operation of the wind farm (1) by selecting the set of operational set points for each of the individual wind turbines (2), respectively, which, according to the corresponding operational performance results in the optimal fulfilment of the optimisation criterion for the wind farm (1)
∘ sending data to the individual wind turbines (2) instructing them to operate at the selected sets of operational set points, and
∘ operating the individual wind turbines (2) of the wind farm (1) at the selected sets of operational set points.

2. The method according to claim 1, wherein the established models for wake effects take into account one or more of the following environmental conditions:
- the wind direction (3)
- the wind speed
- the wind turbulence
- the wind shear
- wind veer
- the temperature of the air
- the humidity of the air
- the position of the wind turbine (2) relative to the landscape
- the position of the wind turbine (2) within the wind farm (1)
- the distance between the wind turbines (2) of the wind farm (1)

3. The method according to claim 1 ro 2, wherein said optimisation criterion comprises the degradation of the individual wind turbines of the wind farm and operational performance corresponding to the sets of operational set points include the relation between thrust and wind speed.

4. The method according to any of the preceding claims, wherein the sets of operational set points define the torque control of the individual wind turbines (2).

5. A wind farm (1) comprising a plurality of wind turbines (2) and control means arranged to exchange data with each of the wind turbines (2) of the wind farm (1) and to control the operation of the wind farm (1) in accordance with the method according to any of the preceding claims.

6. The wind farm (1) according to claim 5, wherein the operation of the wind farm (1) is being controlled in accordance with the method according to any of claims 1-4.

## Patentansprüche

1. Verfahren zum Steuern des Betriebs eines Windparks (1), umfassend eine Vielzahl von Windturbinen (2) und Steuermittel, die dazu angeordnet sind, Daten mit jeder von den Windturbinen (2) des Windparks (1) austauschen zu können, wobei das Verfahren die Schritte umfasst:
- Einrichten, für jede Windturbine (2) des Windparks (1), eines Modells für die von der betreffenden Windturbine (2) für eine bestimmte Gruppe von Umgebungsbedingungen verursachten Windschatteneffekte,
- Definieren, für jede Windturbine (2) des Windparks (1), einer finiten Anzahl von Gruppen von betrieblichen Einstellpunkten, die mindestens Einstellpunkte, die die Pitch-Steuerung der einzelnen Windturbine (2) definieren, und Einstellpunkte, die die Gier-Steuerung der einzelnen Windturbine (2) definieren, beinhalten, wobei jede dieser Gruppen von betrieblichen Einstellpunkten einer definierten betrieblichen Leistung entspricht, welche die Beziehung zwischen Energieproduktion und der Windgeschwindigkeit beinhaltet, mit der diese spezifische Windturbine (2) betrieben werden kann, wobei die Gruppen von betrieblichen Einstellpunkten unterschiedliche betriebliche Leistungen definieren und wobei jede Gruppe von betrieblichen Einstellpunkten durch den Hersteller der Windturbine (2) zertifiziert ist,
- Definieren eines Optimierungskriteriums für den Windpark, und
- Wiederholen der Schritte:
o Empfangen von Daten, die Umgebungsbedingungen um den Windpark (1) betreffen,
o Optimieren, auf Grundlage der empfangenen Daten, die die Umgebungsbedingungen und die eingerichteten Modelle für Windschatteneffekte betreffen, des Betriebs des Windparks (1) durch jeweiliges Auswählen der Gruppe von betrieblichen Einstellpunkten für jede von den einzelnen Windturbinen (2), was gemäß der entsprechenden betrieblichen Leistung in der optimalen Erfüllung des Optimierungskriteriums für den Windpark (1) resultiert,
o Senden von Daten an die einzelnen Windturbinen (2), mit denen diese angewiesen werden, bei den ausgewählten Gruppen von betrieblichen Einstellpunkten zu arbeiten, und
∘ Betreiben der einzelnen Windturbinen (2) des Windparks (1) bei den ausgewählten Gruppen von betrieblichen Einstellpunkten.

2. Verfahren nach Anspruch 1, wobei die eingerichteten Modelle für Windschatteneffekte eine oder mehrere der folgenden Umgebungsbedingungen berücksichtigen:
- die Windrichtung (3)
- die Windgeschwindigkeit
- die Windturbulenz
- die Windscherung
- Winddrehung
- die Temperatur der Luft
- die Feuchtigkeit der Luft
- die Position der Windturbine (2) relativ zur Landschaft
- die Position der Windturbine (2) innerhalb des Windparks (1)
- den Abstand zwischen den Windturbinen (2) des Windparks (1)

3. Verfahren nach Anspruch 1 oder 2, wobei das Optimierungskriterium die Zustandsverschlechterung der einzelnen Windturbinen des Windparks umfasst und die betriebliche Leistung entsprechend den Gruppen von betrieblichen Einstellpunkten die Beziehung zwischen Schub und Windgeschwindigkeit beinhaltet.

4. Verfahren nach einem der vorhergehenden Ansprüche, wobei die Gruppen von betrieblichen Einstellpunkten die Drehmomentsteuerung der einzelnen Windturbinen (2) definieren.

5. Windpark (1), umfassend eine Vielzahl von Windturbinen (2) und Steuerungsmittel, die dazu angeordnet sind, Daten mit jeder der Windturbinen (2) des Windparks (1) auszutauschen und den Betrieb des Windparks (1) entsprechend dem Verfahren nach einem der vorhergehenden Ansprüche zu steuern.

6. Windpark (1) nach Anspruch 5, wobei der Betrieb des Windparks (1) entsprechend dem Verfahren nach einem der Ansprüche 1-4 gesteuert wird.

## Revendications

1. Procédé de commande du fonctionnement d'un parc éolien (1) comprenant une pluralité d'éoliennes (2) et des moyens de commande agencés pour pouvoir échanger des données avec chacune des éoliennes (2) du parc éolien (1), ledit procédé comprenant les étapes :
- d'établissement, pour chaque éolienne (2) du parc éolien (1), d'un modèle des effets de sillage provoqués par l'éolienne donnée (2) pour un ensemble donné de conditions environnementales,
- de définition, pour chaque éolienne (2) du parc éolien (1), d'un nombre fini d'ensembles de points de consigne opérationnels comportant au moins des points de consigne définissant la commande de pas de l'éolienne individuelle (2) et des points de consigne définissant la commande d'orientation de l'éolienne individuelle (2), dont chaque ensemble de points de consigne opérationnels correspond à une performance opérationnelle définie comportant la relation entre la production d'énergie et la vitesse du vent, à laquelle cette éolienne spécifique (2) peut être exploitée, dans lequel les ensembles de points de consigne opérationnels définissent différentes performances opérationnelles, et dans lequel chaque ensemble de points de consigne opérationnels est certifié par le fabricant de l'éolienne (2),
- de définition de critères d'optimisation du parc éolien, et
- de répétition des étapes :
∘ de réception de données concernant les conditions environnementales autour du parc éolien (1)
∘ d'optimisation, sur la base des données reçues concernant les conditions environnementales et les modèles établis pour les effets de sillage, du fonctionnement du parc éolien (1) en sélectionnant l'ensemble de points de consigne opérationnels pour chacune des éoliennes individuelles (2), respectivement, qui, en fonction de la performance opérationnelle correspondante, permet de remplir de manière optimale le critère d'optimisation du parc éolien (1)
∘ d'envoi de données aux éoliennes individuelles (2) leur demandant de fonctionner aux ensembles sélectionnés de points de consigne opérationnels, et
∘ de fonctionnement des éoliennes individuelles (2) du parc éolien (1) aux ensembles sélectionnés de points de consigne opérationnels.

2. Procédé selon la revendication 1, dans lequel les modèles établis pour les effets de sillage prennent en compte une ou plusieurs des conditions environnementales suivantes :
- la direction du vent (3)
- la vitesse du vent
- les turbulences du vent
- le cisaillement du vent
- une saute de vent
- la température de l'air
- l'humidité de l'air
- la position de l'éolienne (2) par rapport au paysage
- la position de l'éolienne (2) au sein du parc éolien (1)
- la distance entre les éoliennes (2) du parc éolien (1)

3. Procédé selon la revendication 1 ou 2, dans lequel ledit critère d'optimisation comprend la dégradation des éoliennes individuelles du parc éolien et les performances opérationnelles correspondant aux ensembles de points de consigne opérationnels comportent la relation entre la poussée et la vitesse du vent.

4. Procédé selon l'une quelconque des revendications précédentes, dans lequel les ensembles de points de consigne opérationnels définissent la commande de couple des éoliennes individuelles (2).

5. Parc éolien (1) comprenant une pluralité d'éoliennes (2) et des moyens de commande agencés pour échanger des données avec chacune des éoliennes (2) du parc éolien (1) et pour commander le fonctionnement du parc éolien (1) conformément au procédé selon l'une quelconque des revendications précédentes.

6. Parc éolien (1) selon la revendication 5, dans lequel le fonctionnement du parc éolien (1) est commandé conformément au procédé selon l'une quelconque des revendications 1 à 4.
